(19) Europäisches Patentamt
European Patent Office
Office européen des brevets

(11) EP 3 210 755 A1

(12) EUROPEAN PATENT APPLICATION
published in accordance with Art. 153(4) EPC

(43) Date of publication:
30.08.2017 Bulletin 2017/35

(51) Int Cl.:
B29C 67/00 (2017.01)          B22F 3/105 (2006.01)
B22F 3/16 (2006.01)           B33Y 10/00 (2015.01)
B33Y 30/00 (2015.01)          B33Y 50/00 (2015.01)
C03B 7/088 (2006.01)          F16K 29/00 (2006.01)

(21) Application number: 15899113.3

(22) Date of filing: 25.12.2015

(86) International application number:
PCT/JP2015/086304

(87) International publication number:
WO 2017/109964 (29.06.2017 Gazette 2017/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Technology Research Association For
Future
Additive Manufacturing
Chiyoda-ku
Tokyo 1000005 (JP)

(72) Inventor: HONDA, Kazuhiro
Akishima-shi, Tokyo 196-8558 (JP)

(74) Representative: TBK
Bavariaring 4-6
80336 München (DE)

(54) **THREE-DIMENSIONAL LAMINATE MOLDING DEVICE, CONTROL METHOD OF THREE-DIMENSIONAL LAMINATE MOLDING DEVICE, AND CONTROL PROGRAM OF THREE-DIMENSIONAL LAMINATE MOLDING DEVICE**

(57) In a three-dimensional laminating and shaping apparatus, a material is quantitatively spread without clogging a supply port with the material. The three-dimensional laminating and shaping apparatus includes a material spreader that spreads a material of a three-dimensional laminated and shaped object on a spread surface, and includes at least one tapered portion in which a diameter decreases from an upstream side to a downstream side. The three-dimensional laminating and shaping apparatus also includes at least one vibration ball that is arranged in the tapered portion of the material spreader and vibrates, and a vibration controller that controls vibration of the vibration ball.

FIG. 1

**Description**

TECHNICAL FIELD

The present invention relates to a three-dimensional laminating and shaping apparatus, a control method of the three-dimensional laminating and shaping apparatus, and a control program of the three-dimensional laminating and shaping apparatus.

BACKGROUND ART

In the above technical field, patent literature 1 discloses a technique of forming a powder layer by allowing a powder to fall by its own weight from the supply port of a powder supplier and supplying the powder to a shaping table (paragraph [0021] of the literature and the like).

CITATION LIST

PATENT LITERATURE

Patent literature 1: Japanese Patent Laid-Open No. 2010-132960

SUMMARY OF THE INVENTION

TECHNICAL PROBLEM

The technique described in the above literature, however, cannot quantitatively spread a material since the supply port is clogged with the material.
The present invention enables to provide a technique of solving the above-described problem.

SOLUTION TO PROBLEM

One aspect of the present invention provides a three-dimensional laminating and shaping apparatus comprising:

a material spreader that spreads a material of a three-dimensional laminated and shaped object on a spread surface, and includes at least one tapered portion in which a diameter decreases from an upstream side to a downstream side;
at least one vibration ball that is arranged in the tapered portion and vibrates; and
a vibration controller that controls vibration of the vibration ball.

Another aspect of the present invention provides a control method of a three-dimensional laminating and shaping apparatus including a material spreader that spreads a material of a three-dimensional laminated and shaped object on a spread surface and includes at least one tapered portion in which a diameter decreases from an upstream side to a downstream side, and at least one vibration ball that is arranged in the tapered portion and vibrates, the method comprising:

controlling vibration of the vibration ball.

Still other aspect of the present invention provides a control program of a three-dimensional laminating and shaping apparatus including a material spreader that spreads a material of a three-dimensional laminated and shaped object on a spread surface and includes at least one tapered portion in which a diameter decreases from an upstream side to a downstream side, and at least one vibration ball that is arranged in the tapered portion and vibrates, the program for causing a computer to execute a method, comprising:

controlling vibration of the vibration ball.

ADVANTAGEOUS EFFECTS OF INVENTION

According to the present invention, it is possible to quantitatively spread a material without clogging a supply port with the material.

BRIEF DESCRIPTION OF DRAWINGS

Fig. 1 is a view showing the arrangement of a three-dimensional laminating and shaping apparatus according to the first embodiment of the present invention;

Fig. 2 is a view schematically showing the overall arrangement of a three-dimensional laminating and shaping apparatus according to the second embodiment of the present invention;

Fig. 3 is a schematic sectional view showing the arrangement of the material spreader of the three-dimensional laminating and shaping apparatus according to the second embodiment of the present invention;

Fig. 4A is a schematic side view showing the arrangement of the material spreader of a three-dimensional laminating and shaping apparatus according to a technical premise of the three-dimensional laminating and shaping apparatus according to the second embodiment of the present invention;

Fig. 4B is a schematic enlarged side view showing the arrangement of the nozzle portion of the material spreader of the three-dimensional laminating and shaping apparatus according to the technical premise of the three-dimensional laminating and shaping apparatus according to the second embodiment of the present invention;

Fig. 4C is a schematic enlarged side view showing the arrangement of the nozzle portion of the material spreader of the three-dimensional laminating and shaping apparatus according to the technical premise of the three-dimensional laminating and shaping apparatus according to the second embodiment of the present invention;

Fig. 5 is a view showing the arrangement of a three-dimensional laminating and shaping apparatus according to the third embodiment of the present invention;

Fig. 6A is a schematic sectional view showing the arrangement of the material spreader of the three-dimensional laminating and shaping apparatus according to the third embodiment of the present invention;

Fig. 6B is a schematic sectional view showing the arrangement of the cartridge unit of the three-dimensional laminating and shaping apparatus according to the third embodiment of the present invention;

Fig. 6C is a schematic sectional view showing the arrangement of the cartridge unit of the three-dimensional laminating and shaping apparatus according to the third embodiment of the present invention;

Fig. 7A is a view schematically showing material supply by the three-dimensional laminating and shaping apparatus according to the third embodiment of the present invention;

Fig. 7B is a view schematically showing material supply by the three-dimensional laminating and shaping apparatus according to the third embodiment of the present invention;

Fig. 8 is a view showing the relationship between the vibration ball and nozzle opening of the three-dimensional laminating and shaping apparatus according to the third embodiment of the present invention;

Fig. 9 is a graph showing the relationship between the number of material particles and the diameter of the vibration ball of the three-dimensional laminating and shaping apparatus according to the third embodiment of the present invention;

Fig. 10 is a graph showing the relationship between a supply powder amount and an amplitude given to the vibration ball of the three-dimensional laminating and shaping apparatus according to the third embodiment of the present invention;

Fig. 11 is a powder flow rate table showing combinations of powder flow rates, powders, and vibration balls, which is included in the three-dimensional laminating and shaping apparatus according to the third embodiment of the present invention; and

Fig. 12 is a view showing the arrangement of a three-dimensional laminating and shaping apparatus according to the fourth embodiment of the present invention.

DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

[First Embodiment]

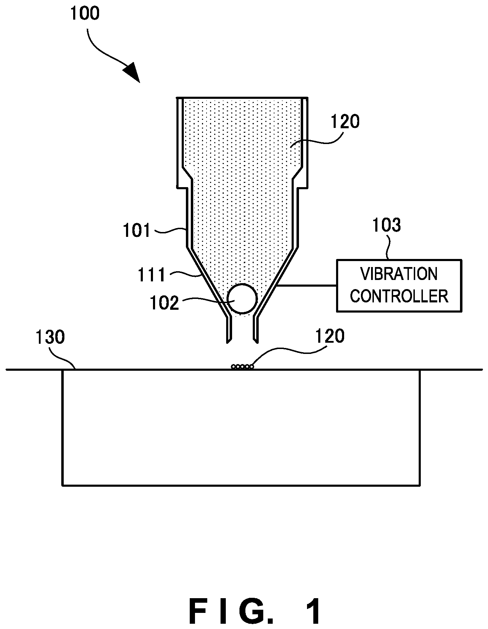

A three-dimensional laminating and shaping apparatus 100 according to the first embodiment of the present invention will be described with reference to Fig. 1. The three-dimensional laminating and shaping apparatus 100 is an apparatus for shaping a three-dimensional laminated and shaped object by spreading the material of the three-dimensional laminated and shaped object on a spread surface, melting and solidifying the material by irradiating the spread material with an electron beam, a laser beam, or the like, and laminating the material.

As shown in Fig. 1, the three-dimensional laminating and shaping apparatus 100 includes a material spreader 101, a vibration ball 102, and a vibration controller 103. The material spreader 101 spreads a material 120 of the three-dimensional laminated and shaped object on a spread surface 130, and includes at least one tapered portion 111 in which a diameter decreases from the upstream side to the downstream side. The vibration ball 102 is arranged in the tapered portion 111. The vibration controller 103 controls vibration of the vibration ball.

According to this embodiment, since the vibration ball is vibrated, it is possible to quantitatively spread the material without clogging a supply port with the material.

[Second Embodiment]

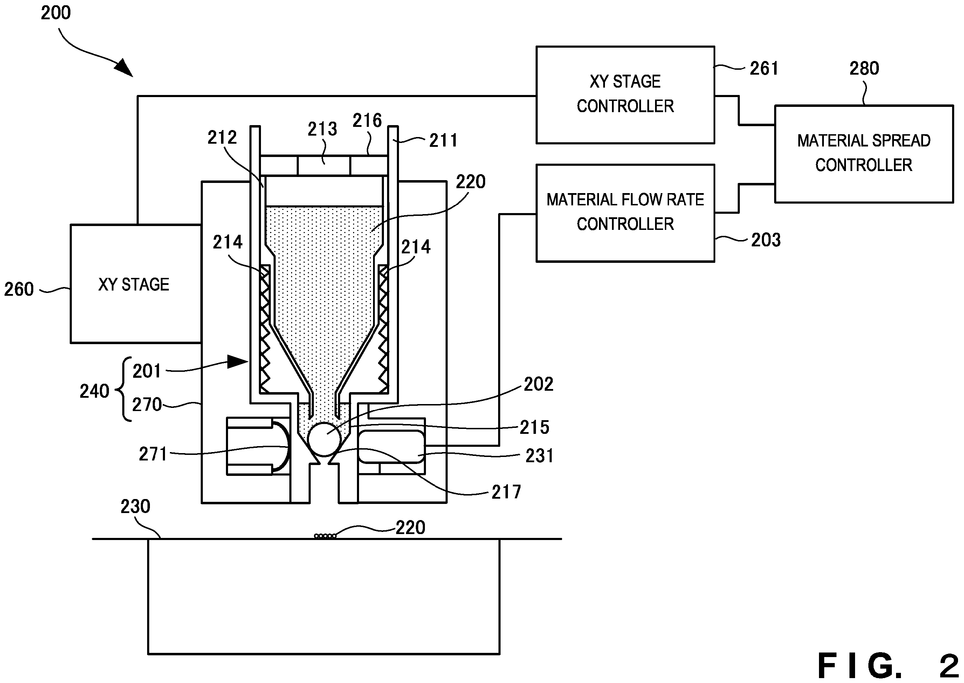

A three-dimensional laminating and shaping apparatus 200 according to the second embodiment of the present invention will be described with reference to Figs. 2 to 4C. Fig. 2 is a view for explaining the overall arrangement of the three-dimensional laminating and shaping apparatus 200 according to this embodiment. Note that in a description of this embodiment, to avoid the views from becoming complicated, members unnecessary for the description and the like are not illustrated, as needed.

<Technical Premise>

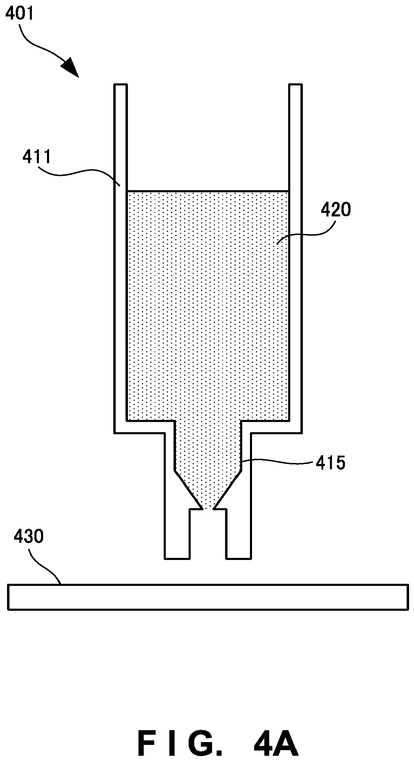

The technical premise of the three-dimensional laminating and shaping apparatus 200 according to this embodiment will be described with reference to Figs. 4A to 4C. Figs. 4A to 4C are schematic sectional views each showing the arrangement of the material spreader of a three-dimensional laminating and shaping apparatus according to the technical premise of the three-dimensional laminating and shaping apparatus according to this embodiment.

As shown in Fig. 4A, a material spreader 401 is a tubular member (outer cylinder 411) in which a nozzle portion 415 is provided on the distal end side, that is, a side closer to a spread surface 430. On the upper portion side of the nozzle portion 415, there is provided a material storage for storing a material 420 such as a powder. The material spreader 401 is formed by integrating the nozzle portion 415 and the material storage. The material 420 is stored in the material storage, and a mechanism (not shown) compensates for a shortage.

The nozzle portion 415 has a small nozzle diameter on a side closer to the spread surface 430 to control a material flow rate. That is, the nozzle portion 415 has a tapered shape in which the nozzle diameter decreases from the upstream side to the downstream side. The material 420 is spread on the spread surface 430 via the nozzle portion 415 from the material storage. Furthermore, a two-dimensional driver (not shown) relatively, two-dimensionally moves the material spreader 401 or the spread surface 430 (shaping surface), thereby two-dimensionally spreading the material 420 on the spread surface 430.

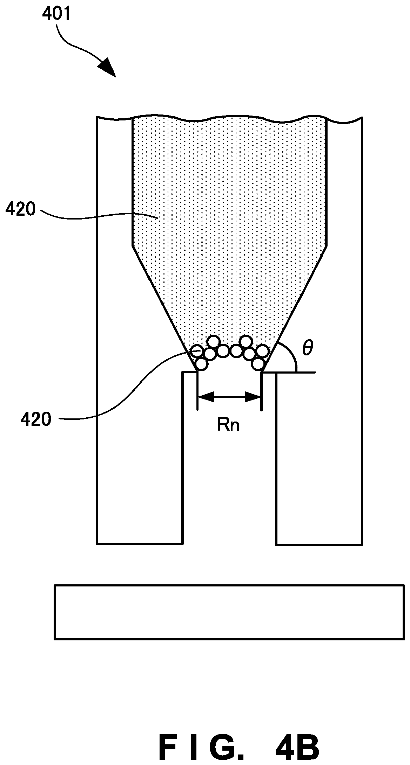

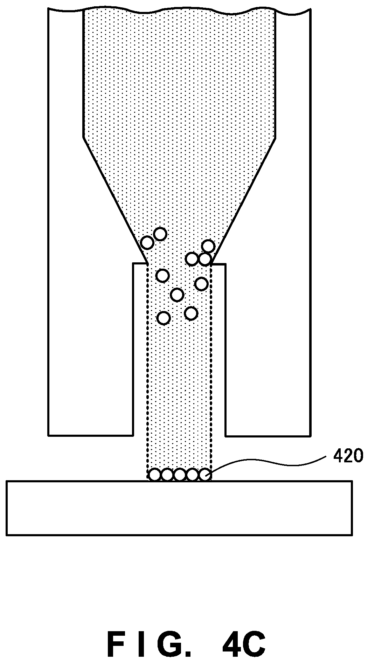

Figs. 4B and 4C are schematic enlarged side views each showing the nozzle portion 415. Fig. 4B shows a state in which the material 420 such as a powder forms a lump in the nozzle portion 415, thereby causing clogging. The clogged state is, for example, a state caused when the powder passes through the nozzle portion 415 having a small diameter, a thin tube, or the like. It is phenomenologically considered that such clogged state occurs when the relationship between a nozzle diameter $R_n$ and a particle size satisfies "nozzle diameter $\approx$ particle size x 6". This clogged state is called a powder dome since the powder forms an upward convex arch.

Fig. 4C shows a case in which the powder flows without forming any lump in the nozzle portion 415. As a condition under which the material 420 such as the powder forms a lump (clogged state or powder dome), parameters such as the type of powder, the particle size, the nozzle diameter, and the taper angle $\theta$ of the nozzle are associated with each other complicatedly. There is also provided a method in which even if the powder dome (clogged state or lump) is formed, the powder dome is destroyed (collapsed) by vibrating the nozzle portion 415 to allow the powder to flow.

However, even if such method is adopted, the above-described parameters are associated with each other complicatedly, thereby disabling general-purpose use of the method. For example, if the type of powder is different, even if other conditions and parameters are the same, the above-described powder dome (clogged state or lump) may or may not be formed. Therefore, the method of simply vibrating the nozzle cannot quantitatively spread the material 420 such as the powder. Consequently, an apparatus capable of quantitatively spreading the material 420 such as the powder regardless of the parameters such as the type of powder, the particle size, the nozzle diameter, and the taper angle of the nozzle has been desired.

<Technique of Embodiment>

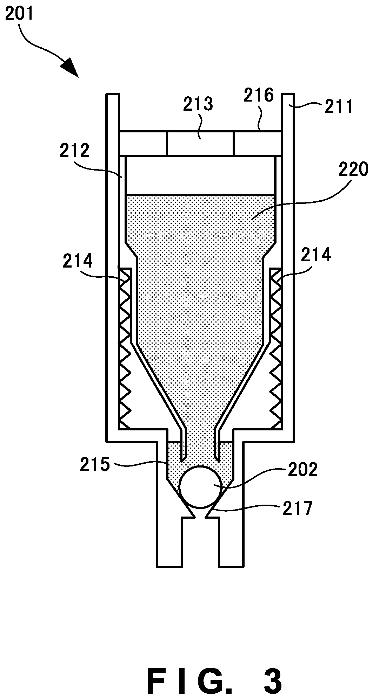

Fig. 2 is a view schematically showing the overall arrangement of the three-dimensional laminating and shaping apparatus 200 according to this embodiment. Fig. 3 is a schematic sectional view showing the arrangement of the material spreader of the three-dimensional laminating and shaping apparatus 200 according to this embodiment. The three-dimensional laminating and shaping apparatus 200 includes a material spreader 201, a vibration ball 202, and a material flow rate controller 203.

The material spreader 201 includes an outer cylinder 211, an inner cylinder 212, a material supply port 213, a spring 214, a nozzle portion 215, and an inner cylinder fixing tool 216. The material flow rate controller 203 is connected to a vibrator 231. The three-dimensional laminating and shaping apparatus 200 further includes an XY stage 260, an XY stage controller 261, and a material spread controller 280.

The material spreader 201 is formed by including the outer cylinder 211 and the inner cylinder 212. The inner cylinder 212 also serves as a material storage for storing a material 220 of the three-dimensional laminated and shaped object. The inner cylinder 212 is screwed into a thread cut inside an upper portion of the outer cylinder 211, and attached inside the outer cylinder 211. Furthermore, the inner cylinder 212 is supported by the spring 214 provided in a lower portion of the outer cylinder 211. The arrangement position of the inner cylinder 212 can be freely adjusted by the screw-in amount and the supporting force of the spring 214.

If the inner cylinder 212 is screwed into a predetermined position, the inner cylinder fixing tool 216 is used to fix the position of the inner cylinder 212 at that position. The material 220 is stored in the inner cylinder 212. By adjusting the position of the inner cylinder 212 to a position at which the distal end of the inner cylinder 212 contacts the vibration ball 202, it is possible to seal the material 220 stored in the inner cylinder 212. By filling the inner cylinder 212 with an inert gas, it is possible to prevent contamination from attaching to the material 220.

The distal end of the material spreader 201, that is, the distal end of the outer cylinder 211 has a tapered shape, and forms the nozzle portion 215. In a portion near the distal end of the inner cylinder 212, the diameter of the inner cylinder 212 gradually decreases to form a tapered portion, thereby obtaining a tapered shape.

The vibration ball 202 is arranged in a material channel through which the material 220 is supplied to a spread surface 230 by passing through the nozzle portion 215 from the inner cylinder 212, that is, in a tapered portion 217 as a portion having a tapered shape at the distal end or lower portion of the nozzle portion 215. While the vibration ball 202 stays still in the tapered portion 217, the opening of the nozzle portion 215 is closed by the vibration ball 202.

The material flow rate controller 203 controls the supply amount of the material 220 to be spread on the spread surface 230 from the material spreader 201. More specifically, the material flow rate controller 203 vibrates the vibrator 231 connected to the material flow rate controller 203, thereby vibrating the outer cylinder 211 (or material spreader 201). If the outer cylinder 211 is vibrated, the vibration ball 202 is also vibrated, and the vibration ball 202 floats from the tapered portion 217 to generate a gap between the vibration ball 202 and the tapered portion 217. The material 220 flows from the gap and is spread on the spread surface 230.

The material flow rate controller 203 generates a signal for vibrating the vibrator 231. This signal is a rectangular wave, and the signal strength is controlled by an amplitude value and frequency value from the material spread controller 280. Note that the signal generated by the material flow rate controller 203 may be a sine wave.

The vibrator 231 is a vibration source such as a piezoelectric element. The direction of a vibration applied from the vibrator 231 to the outer cylinder 211 is the horizontal direction but is not limited to this. Since the density of the vibration ball 202 is higher than that of the material 220 such as the powder existing around the vibration ball 202, the vibration ball 202 is intended to be at a lower position by the vibration in the horizontal direction due to a so-called Brazil nut effect (muesli effect).

The material spreader 201 is detachably stored in a cartridge holder 270, and the material spreader 201 and the cartridge holder 270 form a cartridge unit 240. Thus, after the material spreader 201 is set in the cartridge holder 270, the inner cylinder 212 can be detached from the outer cylinder 211 and replaced.

If, for example, so-called monochrome printing is executed using one type of material 220, the material may be supplied from the material supply port 213 or the inner cylinder 212 may be replaced at the time of replenishment of the material 220. If so-called multicolored printing is executed using a plurality of materials 220, the inner cylinder 212 is replaced. As described above, since the material spreader 201 is of a cartridge type, it is possible to readily execute multicolored printing and the like. Furthermore, since the cartridge unit 240 in which the material spreader 201 can be detached from the cartridge holder 270 is used, the apparatus is not contaminated and management becomes easy.

The XY stage 260 two-dimensionally drives the cartridge unit 240, and the XY stage controller 261 controls the XY stage 260. The material spread controller 280 executes control by instructing a control target value to the material flow rate controller 203 and XY stage controller 261 based on the spread amount of the material 220, the structure of the three-dimensional laminated and shaped object, and the like.

A cartridge fixing spring 271 is provided in a lower portion of the cartridge holder 270, and arranged at a position facing the vibrator 231. The cartridge fixing spring 271 presses the material spreader 201 in the horizontal direction, and fixes it so as not to move.

In the material spreader 201 storing the material 220, the inner cylinder 212 is supported by the spring 214 provided inside the outer cylinder 211. By adjusting the position of the inner cylinder 212 so that the distal end of the inner cylinder 212 is separated from the vibration ball 202, some particles of the material 220 stored in the inner cylinder 212 flow downward (downstream) from the opening at the distal end of the inner cylinder 212. Since the vibration ball 202 is in contact with the tapered portion 217 of the nozzle portion 215 at the distal end of the outer cylinder 211, the material 220 flowing from the inner cylinder 212 is stored on the vibration ball 202.

To the contrary, if it is desired to stop flowing of the material 220, the inner cylinder 212 is pressed until the distal end of the inner cylinder 212 contacts the vibration ball 202, and the position of the inner cylinder 212 is fixed by the inner cylinder fixing tool 216, thereby stopping flowing of the material 220 stored in the inner cylinder 212.

By vibrating the vibrator 231, the vibration ball 202 is separated from the tapered portion 217 of the nozzle portion 215 to form a gap between the vibration ball 202 and the tapered portion 217. The material 220 flows from the gap, and is spread on the spread surface 230.

According to this embodiment, since the mechanism of vibrating the vibration ball is used to spread the material, it is possible to quantitatively spread the material without clogging the supply port with the material. In addition, since the cartridge type material spreader is used, it is possible to readily execute replacement or replenishment of the material, monochrome printing, multicolored printing, and the like.

[Third Embodiment]

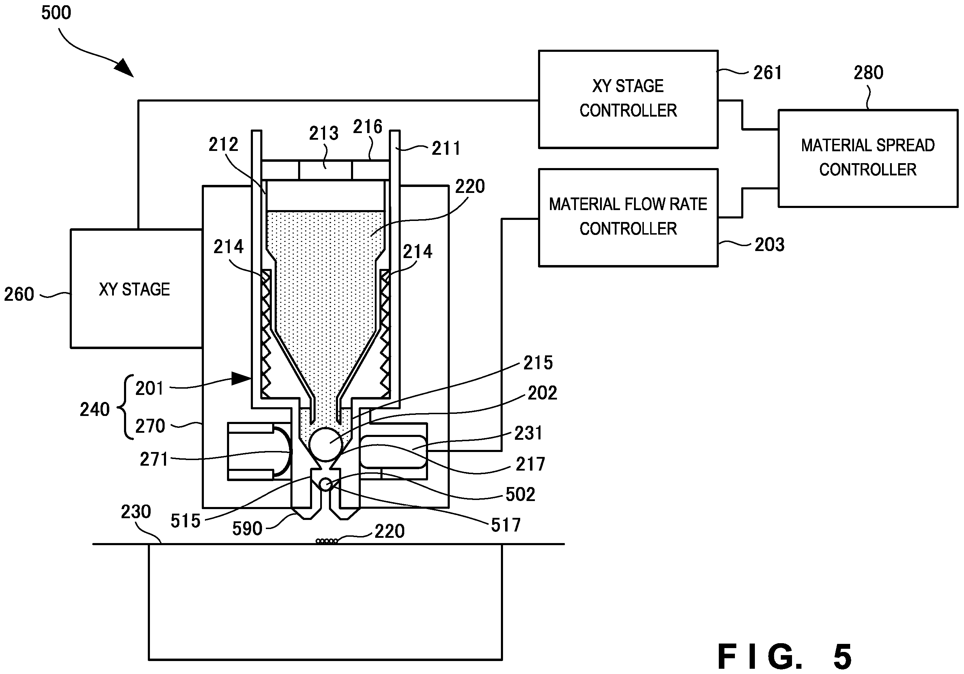

A three-dimensional laminating and shaping apparatus 500 according to the third embodiment of the present invention will be described with reference to Figs. 5 to 11. Fig. 5 is a view for explaining the overall arrangement of the three-dimensional laminating and shaping apparatus 500 according to this embodiment. The three-dimensional laminating and shaping apparatus 500 according to this embodiment is different from that according to the above second embodiment in that two vibration balls are included. The remaining components and operations are the same as those in the second embodiment. Hence, the same reference numerals denote the same components and operations, and a detailed description thereof will be omitted. Note that in a description of this embodiment, to avoid the views from becoming complicated, members unnecessary for the description and the like are not illustrated, as needed.

The three-dimensional laminating and shaping apparatus 500 further includes a second vibration ball 502 (second vibration ball) and an attachment 590. The vibration ball 502 is arranged downstream of a vibration ball 202 (first vibration ball) in a material channel through which a material 220 is supplied to a spread surface 230 by passing through a nozzle portion 215 from an inner cylinder 212. The diameter of the vibration ball 502 is smaller than that of the vibration ball 202. The vibration balls 202 and 502 may or may not be arranged so that the centers of the vibration balls 202 and 502 are on the same axis.

By attaching the attachment 590 to a distal end portion of an outer cylinder 211, a nozzle portion 515 is formed by the attachment 590. The vibration ball 502 is arranged in a tapered portion 517 of the attachment 590, and contacts the tapered portion 517 to close the opening of the attachment 590. Since the attachment 590 is detachable, the diameter, length, material, and the like of the nozzle portion 515 can be variously changed by replacing the attachment 590 in accordance with the type, particle size, and the like of a powder as the material 220.

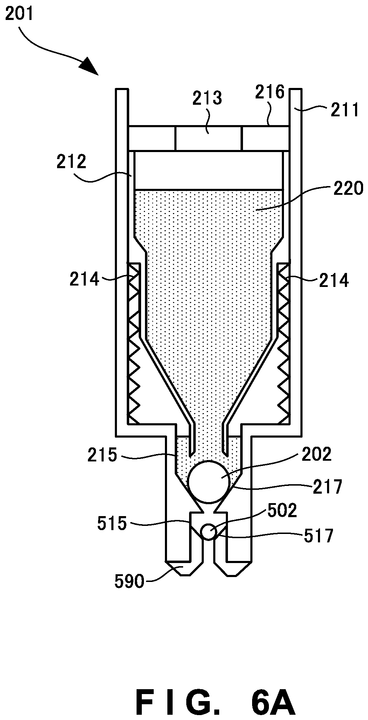

Fig. 6A is a view for explaining the arrangement of a material spreader 201 of the three-dimensional laminating and shaping apparatus 500 according to this embodiment, and is a schematic sectional view showing the material spreader 201. The inner cylinder 212 is filled with the material 220. In the material channel, the vibration ball 202 is arranged upstream and the vibration ball 502 is arranged downstream. The diameter of the vibration ball 502 is smaller than that of the vibration ball 202.

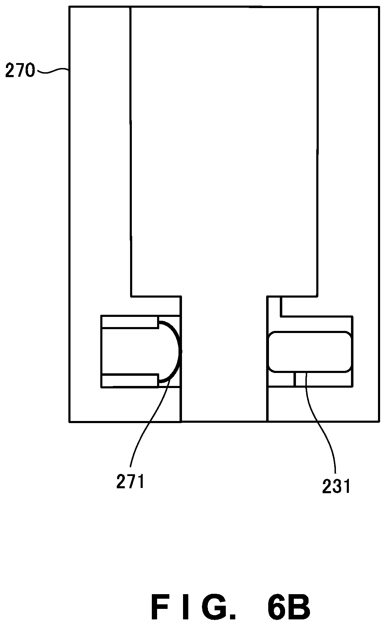

Fig. 6B is a schematic sectional view for explaining the arrangement of the cartridge unit of the three-dimensional laminating and shaping apparatus 500 according to this embodiment, and is a view showing a state in which the material spreader 201 is detached. A cartridge fixing spring 271 and a vibrator 231 are provided in a cartridge holder 270. The cartridge holder 270 has a hollow structure.

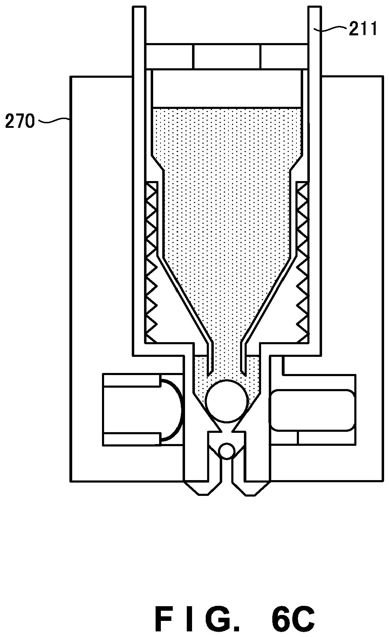

Fig. 6C is a schematic sectional view for explaining the arrangement of the cartridge unit of the three-dimensional laminating and shaping apparatus 500 according to this embodiment, and is a view showing a state in which the material spreader 201 is set in the cartridge holder 270. The material spreader 201 is set and stored in the hollow portion of the cartridge holder 270.

Depending on the material and amount of the stored material 220, the weight of the material 220 becomes very large. If the weight is directly put on the vibration ball 202, the vibration ball 202 becomes difficult to vibrate. Therefore, the material 220 is stored in the inner cylinder 212, an opening smaller than the diameter of the vibration ball 202 is formed in a lower portion of the inner cylinder 212, and the material 220 is allowed to flow from the opening. With this arrangement, even if the weight of the material 220 becomes large or the pressure of the material 220 becomes high, a force applied to the vibration ball 202 is small since the area of the opening of the inner cylinder 212 is small. Furthermore, even if the material 220 flows from the arrangement position of the vibration ball 202, the amount of the material 220 stored on the vibration ball 202 is kept constant. Thus, even if the amount of the material 220 stored in the inner cylinder 212 changes, a variation in the pressure applied to the vibration ball 202 is negligible. Consequently, even if the material 220 is consumed, a predetermined amount of the material 220 can be released.

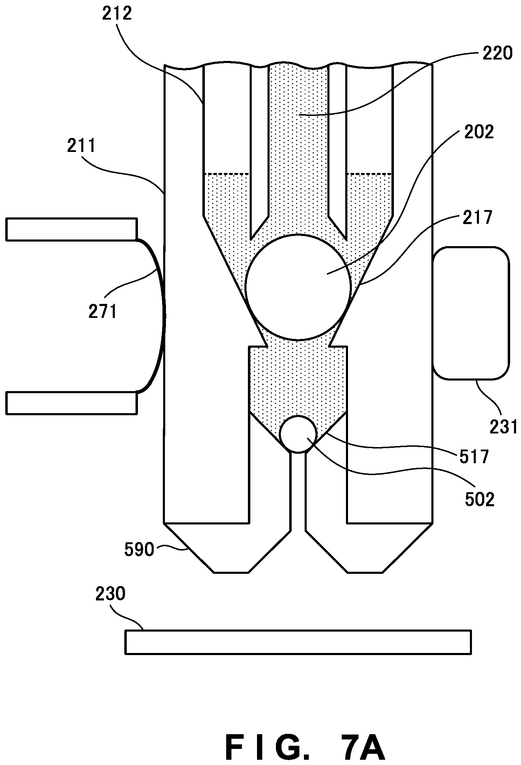

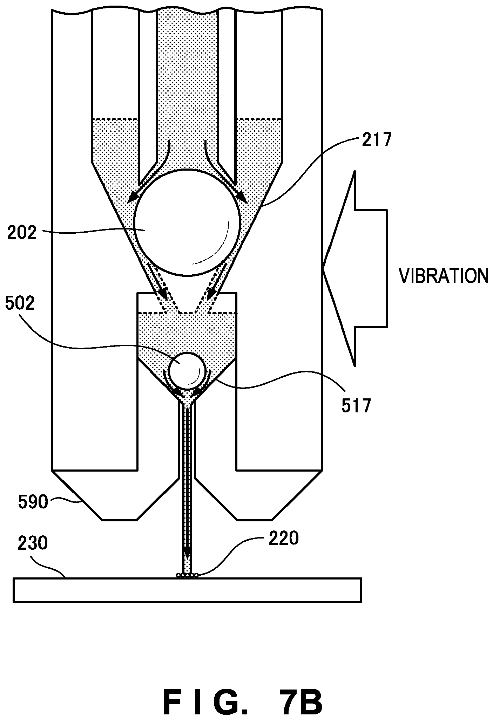

Fig. 7A is a view schematically showing material supply by the three-dimensional laminating and shaping apparatus 500 according to this embodiment, and shows a case in which the vibrator 231 is OFF. Fig. 7B is a view schematically showing material supply by the three-dimensional laminating and shaping apparatus 500 according to this embodiment, and shows a case in which the vibrator 231 is ON.

As shown in Fig. 7A, the outer cylinder 211 is fixed to the cartridge holder 270 by the cartridge fixing spring 271. The outer cylinder 211 is in contact with the vibrator 231. If the vibrator 231 is OFF, the vibration ball 202 and the tapered portion 217 of the outer cylinder 211 are in contact with each other, and thus the material 220 flowing from the inner cylinder 212 is stored on the vibration ball 202. Similarly, since the vibration ball 502 is in contact with a tapered portion 517 of the attachment 590, even if the material 220 is stored on the vibration ball 502, the material 220 does not flow downward (downstream), and is not spread on the spread surface 230.

To the contrary, as shown in Fig. 7B, if the vibrator 231 is turned on to vibrate the outer cylinder 211, the vibration balls 202 and 502 vibrate in synchronism with each other. If the vibration ball 202 vibrates, the vibration ball 202 is separated from the tapered portion 217 to form a gap between the vibration ball 202 and the tapered portion 217, and the material 220 stored on the vibration ball 202 flows downward (downstream) from the gap. Similarly, if the vibration ball 502 vibrates, the vibration ball 502 is separated from the tapered portion 517 to form a gap between the vibration ball 502 and the tapered portion 517, and the material 220 stored on the vibration ball 502 flows downward (downstream) from the gap. This spreads the material 220 on the spread surface 230.

Since the diameter of the vibration ball 202 is larger than that of the vibration ball 502, the flow rate of the material 220 flowing from a portion in which the vibration ball 202 is arranged is different from that of the material 220 flowing from a portion in which the vibration ball 502 is arranged. The flow rate of the material 220 flowing from the portion in which the vibration ball 202 is arranged is higher than that of the material 220 flowing from the portion in which the vibration ball 502 is arranged. Therefore, after a predetermined time elapses, a portion between the vibration balls 202 and 502 is full of the material 220.

Even if the portion between the vibration balls 202 and 502 is full of the material 220, since the vibration balls 202 and 502 vibrate in synchronism with each other, the material 220 flows under the vibration ball 502, and is spread on the spread surface 230 immediately below the material spreader 201. As described above, if the amount of the stored material 220 between the vibration balls 202 and 502 decreases due to the difference between the flow rate of the material 220 flowing under the vibration ball 202 and that of the material 220 flowing under the vibration ball 502, replenishment of the material 220 is automatically performed.

Therefore, if the vibrator 231 is turned off, the portion between the vibration balls 202 and 502 is full of the material 220. In this state, pressure is applied to the vibration ball 502 from above, and the vibration ball 502 contacts the tapered portion 517 and is fixed, thereby preventing the material 220 from flowing downward.

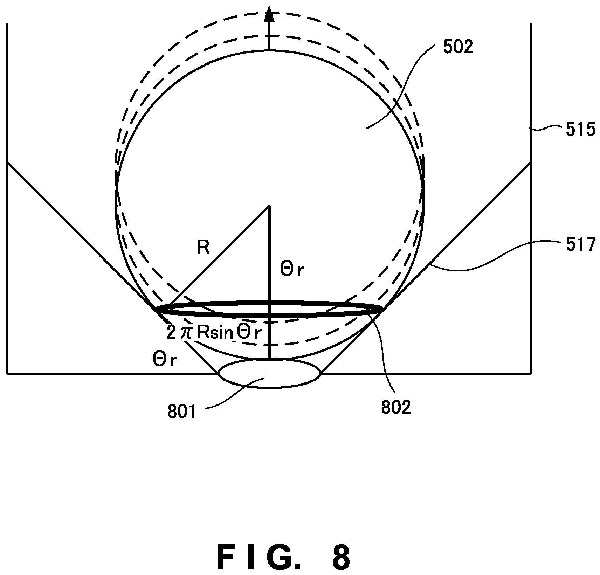

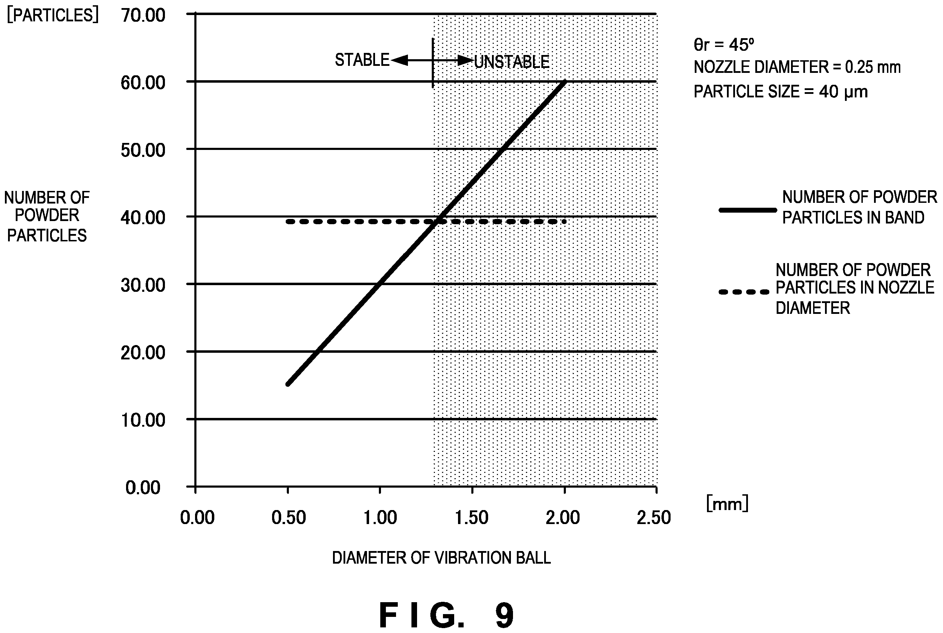

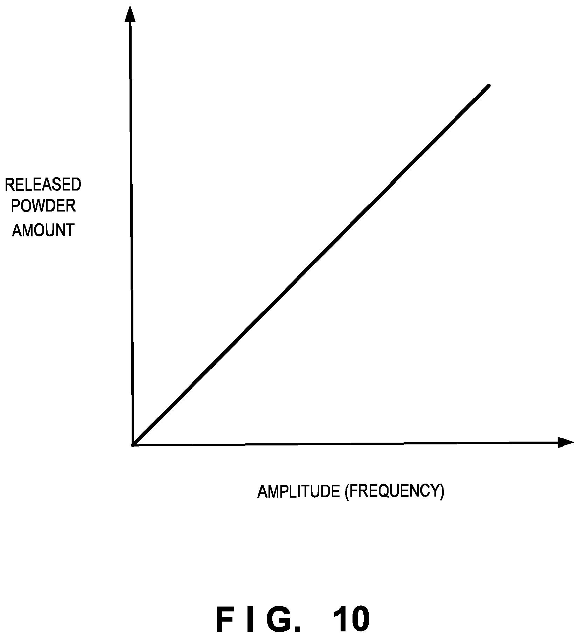

The relationship between the size of the vibration ball 502 and vibration will be described next with reference to Figs. 8 to 10. Fig. 8 is a view showing the relationship between the vibration ball and nozzle opening of the three-dimensional laminating and shaping apparatus according to this embodiment. Fig. 9 is a graph showing the relationship between the number of material particles and the diameter of the vibration ball of the three-dimensional laminating and shaping apparatus according to this embodiment. Fig. 10 is a graph showing the relationship between a supply material amount and an amplitude given to the vibration ball of the three-dimensional laminating and shaping apparatus according to this embodiment.

Let $\theta r$ be the nozzle angle of the nozzle portion 515, R be the radius of the vibration ball 502, Rn be the diameter of a nozzle opening 801, and Rc be the particle size of the material 220. If the vibration ball 502 is not vibrated, the vibration ball 502 is in contact with the tapered portion 517. In this case, a contacting line length is $2\pi R\sin\theta r$. This contacting line is indicated by a band 802. Assume that one vibration moves the vibration ball 502 upward to form a gap for one powder particle of the material 220 between the vibration ball 502 and the tapered portion 517. In this case, a number Nb of powder particles of the material 220 in the band 802 is given by:

$$Nb = 2\pi R\sin\theta r/Rc \qquad\qquad ...(1)$$

A number Ns of powder particles on the nozzle opening plane is given by:

$$Ns = \pi Rn^2/\pi Rc^2 = (Rn/Rc)^2 \qquad\qquad ...(2)$$

The numbers of powder particles flowing from the nozzle opening 801 and the band 802 by one vibration of the vibration ball 502 can be represented by Nb and Ns, respectively.

A condition under which powder particles of the material 220 stably flow is given by:

$$Ns > Nb \qquad \ldots(3)$$

That is, if the amount of powder flowing through the band 802 is larger than that flowing through the nozzle opening 801, the powder is left between the vibration ball 502 and the nozzle opening 801, thereby readily forming a powder dome in the nozzle opening 801. If inequality (3) holds, the amount of powder flowing through the band 802 is equal to that flowing through the nozzle opening 801, and thus the powder stably flows.

Fig. 9 is a graph showing this relationship as a function of the diameter of the vibration ball 502 where $\theta r = 45°$, $Rn = 0.25$ mm, and $Rc = 40$ $\mu$m. In this case, the stable and unstable relationships indicated by inequality (3) are represented by regions. It is to be understood that the diameter of the vibration ball 502 needs to be smaller than 1.25 mm to obtain a stable operation.

Since Nb and Ns linearly increase in accordance with the frequency, inequality (3) is saved with respect to the frequency, and the released powder amount is given by:

$$\text{released powder amount (particles/sec)} = Nb \cdot v \qquad \ldots(4)$$

The moving amount of the vibration ball 502 also linearly responds to a vibration amplitude H. Therefore, in consideration of an arbitrary coefficient $\alpha$, equation (4) is rewritten by:

$$\text{released powder amount (particles/sec)} = \alpha \cdot Nb \cdot v \cdot H \qquad \ldots(5)$$

This relationship is represented by the graph shown in Fig. 10.

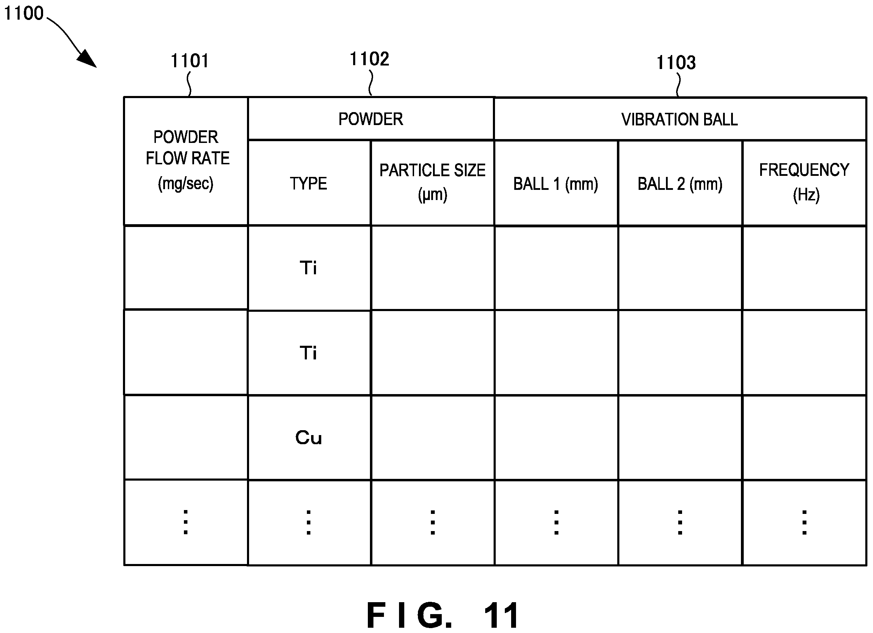

Fig. 11 is a powder flow rate table showing combinations of powder flow rates, powders, and vibration balls, which is included in the three-dimensional laminating and shaping apparatus according to this embodiment. A powder flow rate table 1100 stores a powder 1102 and a vibration ball 1103 in association with a powder flow rate 1101. The powder 1102 stores a type of powder and a particle size. The vibration ball 1103 stores the diameters of the vibration balls 202 and 502, a frequency given to them, and the like.

A material spread controller 280 may adjust the frequency by referring to the powder flow rate table 1100, thereby controlling the flow rate of the powder as the material 220. Note that a powder such as a metal powder, a liquid, a glass particle, a plastic particle, or the like may be used as the material 220. However, the present invention is not limited to them.

According to this embodiment, it is possible to quantitatively spread the material without clogging a supply port with the material. Since the cartridge type material spreader is used, it is possible to readily execute replacement or replenishment of the material, monochrome printing, multicolored printing, and the like. Since the plurality of vibration balls are included, it is possible to stably spread the material. Even if the material is changed, it is possible to control the flow rate by the amplitude and frequency, thereby allowing general-purpose use. In addition, since vibration of the vibration ball can be turned on or off, the flow rate of the material can be pulsed. If the diameter of the vibration ball is made small, even if the material has a size on the order of several $\mu$m, it is possible to freely control the flow rate. If the diameter of the vibration ball is changed, the apparatus characteristic also changes, thereby allowing general-purpose use of the apparatus.

[Fourth Embodiment]

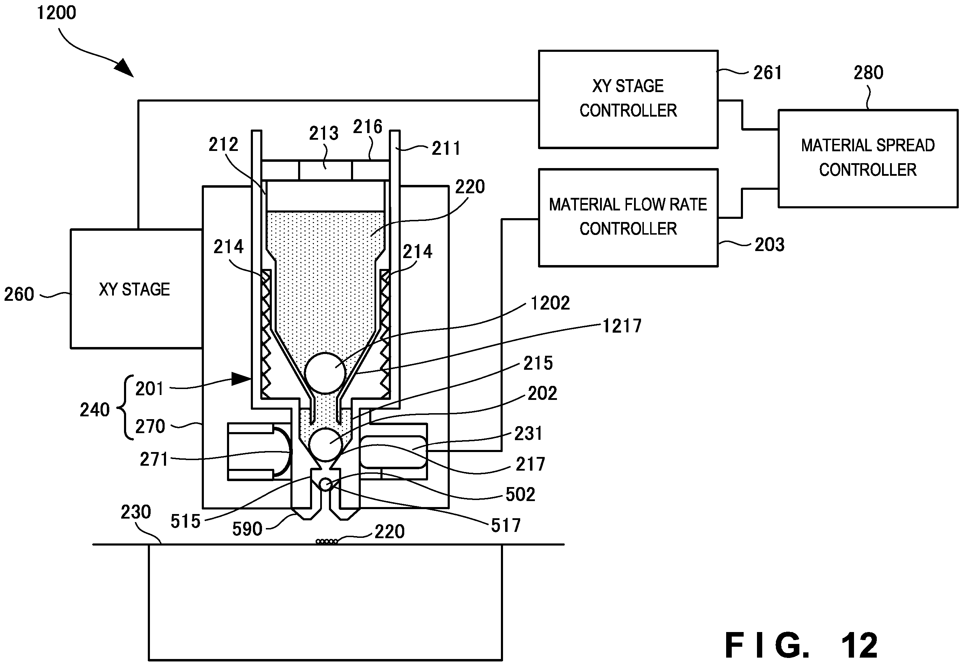

A three-dimensional laminating and shaping apparatus 1200 according to the fourth embodiment of the present invention will be described with reference to Fig. 12. Fig. 12 is a view for explaining the overall arrangement of the three-dimensional laminating and shaping apparatus 1200 according to this embodiment. The three-dimensional laminating and shaping apparatus 1200 according to this embodiment is different from that according to the third embodiment in that three vibration balls are included. The remaining components and operations are the same as those in the third embodiment. Hence, the same reference numerals denote the same components and operations, and a detailed description thereof will be omitted. Note that in a description of this embodiment, to avoid the view from becoming complicated, members unnecessary for the description and the like are not illustrated, as needed.

The three-dimensional laminating and shaping apparatus 1200 includes a third vibration ball 1202 (third vibration ball). The vibration ball 1202 is arranged upstream of a vibration ball 202, and is in contact with a tapered portion 1217. The diameter of the vibration ball 1202 is larger than that of the vibration ball 202. Note that this embodiment has explained the example in which the three vibration balls are included. The number of vibration balls is not limited to this, and four or more vibration balls may be included. In this case, the vibration balls are arranged so that the ball diameter decreases from the upstream side to the downstream side. The arrangement of the vibration balls is not limited to this. Vibration balls of various ball diameters may be appropriately arranged in accordance with the type of material to be spread, its particle size, and the like.

[Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

**Claims**

1.  A three-dimensional laminating and shaping apparatus comprising:

    a material spreader that spreads a material of a three-dimensional laminated and shaped object on a spread surface, and includes at least one tapered portion in which a diameter decreases from an upstream side to a downstream side;
    at least one vibration ball that is arranged in said tapered portion and vibrates; and
    a vibration controller that controls vibration of said vibration ball.

2.  The three-dimensional laminating and shaping apparatus according to claim 1, wherein
    said material spreader includes a first tapered portion and a second tapered portion on the downstream side of said first tapered portion, and
    a first vibration ball is arranged in said first tapered portion and a second vibration ball is arranged in said second tapered portion.

3.  The three-dimensional laminating and shaping apparatus according to claim 1 or 2, wherein said material spreader includes
    an outer cylinder, and
    an inner cylinder that is detachably attached inside said outer cylinder and stores the material.

4.  The three-dimensional laminating and shaping apparatus according to any one of claims 1 to 3, further comprising:

    a storage that detachably stores said material spreader.

5.  The three-dimensional laminating and shaping apparatus according to any one of claims 1 to 4, wherein a diameter of said first vibration ball is larger than a diameter of said second vibration ball.

6.  The three-dimensional laminating and shaping apparatus according to any one of claims 1 to 5, wherein a detachable attachment is provided in a distal end portion of said material spreader.

7.  A control method of a three-dimensional laminating and shaping apparatus including a material spreader that spreads a material of a three-dimensional laminated and shaped object on a spread surface and includes at least one tapered portion in which a diameter decreases from an upstream side to a downstream side, and at least one vibration ball that is arranged in the tapered portion and vibrates, the method comprising:

controlling vibration of the vibration ball.

8. A control program of a three-dimensional laminating and shaping apparatus including a material spreader that spreads a material of a three-dimensional laminated and shaped object on a spread surface and includes at least one tapered portion in which a diameter decreases from an upstream side to a downstream side, and at least one vibration ball that is arranged in the tapered portion and vibrates, the program for causing a computer to execute a method, comprising:

controlling vibration of the vibration ball.

F I G.  1

F I G. 2

EP 3 210 755 A1

201

213    216

211

212

220

214    214

215

202

217

# F I G.   3

401

411

420

415

430

# FIG. 4A

401

420

420

θ

Rn

**F I G. 4B**

F I G. 4C

MATERIAL SPREAD CONTROLLER

280

261

203

XY STAGE CONTROLLER

MATERIAL FLOW RATE CONTROLLER

211
220
216
213
212
214
214
215
202
231
217
502
517
220
201
270
271
230
515
590
240
260

XY STAGE

500

**F I G. 5**

**F I G. 6A**

270 ⌐

271          231

# FIG. 6B

F I G.  6C

**F I G.  7A**

VIBRATION

217

202

502

517

590

230

220

# F I G.  7B

**FIG. 8**

F I G. 9

RELEASED
POWDER
AMOUNT

AMPLITUDE (FREQUENCY)

# F I G. 10

EP 3 210 755 A1

| POWDER FLOW RATE (mg/sec) | POWDER | | VIBRATION BALL | | |
|---|---|---|---|---|---|
| | TYPE | PARTICLE SIZE (μm) | BALL 1 (mm) | BALL 2 (mm) | FREQUENCY (Hz) |
| | Ti | | | | |
| | Ti | | | | |
| | Cu | | | | |
| ⋮ | ⋮ | ⋮ | ⋮ | ⋮ | ⋮ |

1100 1101 1102 1103

# F I G.  11

**FIG. 12**

**EP 3 210 755 A1**

**INTERNATIONAL SEARCH REPORT**

International application No.

PCT/JP2015/086304

A. CLASSIFICATION OF SUBJECT MATTER
*B29C67/00*(2006.01)i, *B22F3/105*(2006.01)i, *B22F3/16*(2006.01)i, *B33Y10/00*
(2015.01)i, *B33Y30/00*(2015.01)i, *B33Y50/00*(2015.01)i, *C03B7/088*(2006.01)i,
*F16K29/00*(2006.01)i

According to International Patent Classification (IPC) or to both national classification and IPC

B. FIELDS SEARCHED

Minimum documentation searched (classification system followed by classification symbols)
B29C67/00, B22F3/105, B22F3/16, B33Y10/00, B33Y30/00, B33Y50/00, C03B7/088,
F16K29/00

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 8-36184 A (Alps Electric Co., Ltd.),<br>06 February 1996 (06.02.1996),<br>paragraphs [0026] to [0137]; fig. 1, 5, 7, 8<br>& US 5785761 A<br>column 2, line 57 to column 21, line 59; fig. 1,<br>5, 7, 8<br>& GB 2291606 A       & GB 9514023 A0<br>& DE 19526748 A       & KR 10-0152408 B | 1,3,4,6-8<br>2,5 |
| Y | JP 2010-132960 A (Panasonic Electric Works Co.,<br>Ltd.),<br>17 June 2010 (17.06.2010),<br>paragraphs [0018] to [0038]; fig. 1 to 9<br>(Family: none) | 1,3,4,6-8 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    29 February 2016 (29.02.16) | Date of mailing of the international search report<br>    15 March 2016 (15.03.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2015/086304 |

C (Continuation).    DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 25361/1988(Laid-open No. 128875/1989) (Pentel Co., Ltd.), 01 September 1989 (01.09.1989), page 7, line 14 to page 8, line 9; fig. 2 (Family: none) | 2,5 |

Form PCT/ISA/210 (continuation of second sheet) (January 2015)

**REFERENCES CITED IN THE DESCRIPTION**

**Patent documents cited in the description**

- JP 2010132960 A